# EUROPEAN PATENT SPECIFICATION

(11) **EP 3 789 243 B1**
(45) Date of publication and mention of the grant of the patent: **20.04.2022**
(21) Application number: 20194282.8
(22) Date of filing: 03.09.2020
(51) Int. Cl.: B60P 3/04, B60H 1/00, B60P 3/20, F25D 17/08, A01K 45/00, A01K 1/00

(54) **VEHICLE FOR TRANSPORTING LIVING ANIMALS**
FAHRZEUG ZUM TRANSPORT LEBENDER TIERE
VÉHICULE POUR LE TRANSPORT D'ANIMAUX VIVANTS

(30) Priority: 03.09.2019 NL 2023757
(43) Date of publication of application: 10.03.2021
(73) Proprietor: Carrosseriebouw Van Ravenhorst B.V., 3771 MB Barneveld (NL)
(72) Inventor: VAN RAVENHORST, Dirk, 3771 MB BARNEVELD (NL)
(74) Representative: de Hoog, Johannes Hendrik

(56) References cited:
- US-A- 6 151 908
- US-A1- 2012 073 322
- US-A1- 2014 335 775
- US-A1- 2018 368 352
- US-B1- 6 817 316

## Description

### TECHNICAL FIELD

The subject disclosure relates to a vehicle for transporting living animals. More particularly, it relates to a vehicle which provides air by means of an air flow generator to a loading space of the vehicle during the transport of living animals.

### BACKGROUND ART

For many years, fowl was transported in an open trailer. This technique permits a great deal of air circulation for cooling the fowl during transport. However, it is no longer widely accepted because of the direct exposure of fowl to the elements and because of damage to the fowl caused by high velocity air flow. Recently, fowl have been transported in closed trailers. These closed trailers have included air handling ducts and fans for circulating air. The air ducts may be connected to various sources of forced air, such as air conditioners, fans, and, in some cases, forced air heaters for winter transport. Air is often circulated from open grates in a false bottom floor of the trailer which run the length of the trailer. Even with more sophisticated environmental control systems, hot spots have developed where circulation is poor. It has been found that many of the fowl in the areas having hot spots do not survive a long transport.

Also trucks for transport of broilers are known wherein the sidewalls of the loading space are exchangeable rolling or sliding curtains. The summer version of the curtains comprises mesh fabric such that environmental air can flow in to the loading space. The winter version of the rolling curtains comprises a fabric preventing the environmental air to flow in to the loading space. There is a trend that people do not want to see how living animals are transported in vehicles. This makes the use of side wall with mesh fabric a less interesting solution to improve the climate in the loading space in summer conditions.

US2013/0074777A1 discloses a trailer for transporting living fowl is provided and includes an enclosure. The side walls of the enclosure are made of fabric so that the living fowl may be loaded and unloaded from the sides of the trailer. A main air supply duct extends a substantial portion of the length of the top of the enclosure and receives conditioned air from an apparatus for generating conditioned air. A plurality of spaced apart vertical side ducts are connected to the main air supply duct and provide support for the top of the enclosure. A plurality of spaced apart floor ducts are connected to the vertical side ducts.

US6817316B1 discloses a trailer for transporting live poultry hatchlings. Hatching containers are stacked to create a central passage for air flow along the length of the trailer from which air is admitted into a side duct on each side of the trailer through apertures in each side wall of the cargo space. This creates a transverse flow through the hatchling containers.

US6151908A1 discloses a large-volume shipping container with sidewall passages extending along the side wall for distributing cool air.

US2018368352A1 discloses a trailer for transporting living fowl. The trailer includes an air conditioning unit in fluid communication with air supply ducts located throughout a first and second enclosure extending vertically along the side walls adjacent a partition wall and horizontally along the floor adjacent the partition wall.

US2012073322A1 discloses distribution of conditioned air into a cargo space of a temperature controlled container through a plurality of longitudinally and laterally spaced apart openings through the cargo support floor. Side air ducts may be provided extending vertically upwardly along the side walls of the container for distributing conditioned air received from a pair of side air outlets in a refrigerant unit associated with the container.

### SUMMARY OF INVENTION

It is an object of the subject technology to provide an improved vehicle for transporting living animals comprising at least a first loading space, which overcomes at least one of the disadvantages of the vehicles described above. The present technology facilitates the conversion of existing curtain trailers without having to modify the frame of the loading space significantly.

According to an aspect of the subject technology, this object is achieved by a vehicle for transporting living animals having the features of claim 1. Advantageous embodiments and further ways of carrying out the present technology may be attained by the measures mentioned in the dependent claims.

A vehicle for transporting living animals according to the subject technology comprises at least a first loading space and an air flow generator. The first loading space is defined by a ceiling, a floor, a front wall, a rear wall, a first sidewall and a second sidewall. At least the first sidewall is movable such that the living animals may be loaded and unloaded along a substantial portion of the length of the first loading space. The air flow generator is configured for generating an air flow of fresh air to be supplied to the first loading space. The first sidewall comprises an air supply duct configured to be coupled to and to receive fresh air from the air flow generator. The air supply duct extends a substantial portion of the length of the first loading space. The air supply duct comprises a plurality of openings for distributing the fresh air over the length of the first loading space. At least a part of the air supply duct is a part of a movable section of the first sidewall.

The concept of the subject technology follows the wish of a part of the population that they do not want to see how live animals intended for consumption/breeding are transported. This wish contradicts with the use of a vehicle that can be loaded from the sides with curtains with mesh fabric which improves the climate in the loading space under summer conditions. Loading a vehicle from a side shortens the time to fully load the loading space and consequently reduces costs. Integration of an air supply duct into the movable side wall or side wall that can be opened and closed allows fresh air to be distributed along the length of the loading space without the live animals being visible from the outside when transported. Another advantage of the subject technology is that it does not require that the frame of the loading space of an existing vehicle has to be adapted to comprise air ducts. The main adaptations of the vehicle are: placing an air flow generator with power source on the vehicle, replacing the mesh curtains with curtains comprising an air supply duct and coupling an input of the air supply duct to the air flow generator.

In an embodiment, the plurality of openings are arranged along the lower half of the first sidewall. The living animals in the loading space will heat the air. The heated air will rise. Supplying fresh air to the lower half of the loading space improves the upward air movement in the loading space. As a result the size of hot spots in the loading space is reduced.

In an embodiment, the ceiling of the first loading space is a lifting roof. This feature makes it possible to use practically the full loading capacity when loaded with stacks of crates containing the live animals.

In an embodiment, the first sidewall is a movable tarpaulin, a sliding tarpaulin or a rollable tarpaulin. In an embodiment, the material of the first sidewall is fabric.

In an embodiment, the air supply duct comprises fastening means configured for longitudinal opening and closing the air supply duct, wherein the fastening means are at least one of: a zipper, a hook and loop fastener. Hygiene is important in the transport of live animals. This is why the containers/trolleys are cleaned after each trip. The inside surfaces of the duct can be easily cleaned by providing the air duct with fasteners over the length of the duct.

In an alternative embodiment, the first sidewall is a folding wall, wherein a section of the folding wall comprises a part of the air supply duct. By coupling the pars of the air supply duct an air supply duct is formed over the length of the loading space.

In an embodiment, the loading space further comprises air outlets provided with controllable closing members and wherein a controller unit controls the position of the closing members in dependence of at least one of the following parameters: temperature, humidity and carbon dioxide concentration in the loading space. These features enable the climate in the loading space to be further improved by locally controlling the airflow through the loading space.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 shows schematically a perspective view of an embodiment of a semi-trailer for transporting living animals;
Fig. 2 shows schematically a side view of the embodiment of the semi-trailer in Fig.1;
Fig. 3 shows schematically a sectional view of the semi-trailer;
Fig. 4A shows schematically a sectional view of a first embodiment of an air supply duct in idle conditions;
Fig. 4B shows schematically a sectional view of the first embodiment of an air supply duct in air supply conditions;
Fig. 5 shows schematically a sectional view of a second embodiment of an air supply duct;
Fig. 6 shows schematically a sectional view of a third embodiment of an air supply duct;
Fig. 7 shows schematically a sectional view of a fourth embodiment of an air supply duct; and,
Fig. 8 shows schematically a sectional view of a fifth embodiment of an air supply duct.

### DESCRIPTION OF EMBODIMENTS

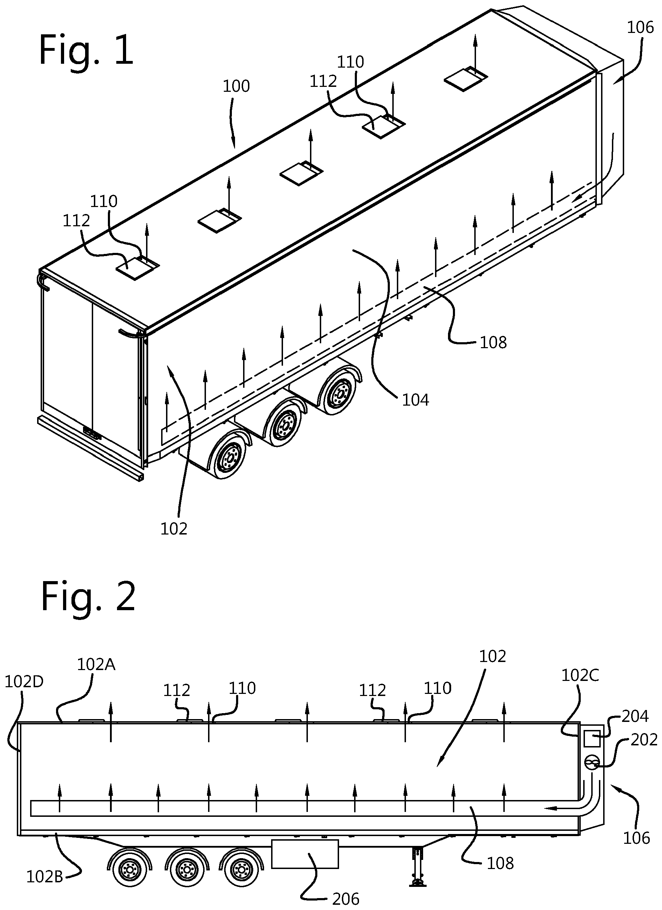

Figs. 1 and 2 show schematically a perspective view and side view of an embodiment of a vehicle 100 for transporting living animals according to the present subject technology. The vehicle shown in Figs. 1 and 2 is a semi-trailer. The present subject technology can be applied to any vehicle 100 for transporting living animals with a loading space 102 suitable for side-loading, such as but not limited to: a truck, a trailer, a semi-trailer and train wagon. The loading space 102 of such a vehicle is defined by a ceiling 102A, a floor 102B, a front wall 102C, a rear wall 102D, a first sidewall 104 and a second sidewall 104A. Although, the present subject technology improves the living conditions in the loading space for any living animals during transport, the subject technology is especially useful for small animals that are transported in cages containing one or more living animals, such as but not limited to: living fowl, broilers, poultry, pigeons and rabbits.

The loading space 102 is adapted to receive a plurality of modules in the form of stacks of cages containing the living animals. Each module includes a number of stacked cages and enables to be easily loaded and unloaded by a forklift when the first sidewall and/or second sidewall is opened.

At least one of the first sidewall 104 and second sidewall 104A is movable such that modules with living animals may be loaded and unloaded from a side of the vehicle. In an embodiment, each side wall 104 is in the form of a movable curtain. The term "movable" in the context of the present description means that the side wall can be displaced such that at least a part of the side wall is opened enabling a fork lift to load/unload the loading space from a side through the opened part. These movable curtains are in an embodiment windproof and non-transparent fabric or tarpaulin for example made of a polyester fabric which is covered on both sides with PVC. In an embodiment the movable curtains have a weight of 900gr/m² and a thickness of 1 - 2mm. The curtains can be in the form of a sliding curtain or rollable curtain. Generally, the curtain extends along the full length of the loading space. When the curtain is a rollable curtain, the curtain is preferably attached to the roof forming the ceiling of the loading space. The roof can be in the form of a lifting roof. A lifting roof facilitates the side-loading of the loading space and allows the empty space above the modules with living animals to be kept to a minimum during transport. The ability to open the side walls enables the modules with stacked cages containing the animals to be readily loaded and unloaded using a fork lift at the side of the vehicle. By attaching a rollable curtain to the lifting roof, the rolled-up rollable curtain can be raised higher than the top of the modules. This allows the loading space to be used up to the roof while still allowing the modules to be loaded and unloaded from a side of the vehicle with a fork lift.

The ceiling 102A of the loading space is the roof of the vehicle. The roof comprises a number of air outlets or ventilation openings 110. Closing members 112 are provided to open or close the ventilation openings 110. In an embodiment the closing members 112 are adjustable to control the air flow through the ventilation openings 110. In a further embodiment, a controller unit 204 controls the positions of the closing members in dependence of at least one of the following parameters: temperature, humidity and carbon dioxide concentration in the loading space.

The vehicle further comprises an air flow generator 106 for generating an air flow of fresh air to be supplied to the loading space. The air flow generator comprises at least a fan 202. Additionally, the air flow generator 106 can comprise a heating element and/or cooling element to enable the supply of conditioned air to the loading space. The controller unit 204 is further configured for controlling the air flow rate generated by the airflow generator, the position of the closing members and optionally the heating element or cooling element to obtain the desired climate in the loading space.

A power unit 206 can be provided to supply power to the air flow generator, heating element, cooling element and climate controller. In this way, the climate in the loading space can still be controlled even when the vehicle is temporarily parked. The power unit 206 can be a battery, a power generator or a combination thereof.

The movable sidewall 104 comprises an air supply duct 108. The air supply duct is integral part of the movable sidewall. The air supply duct 108 is configured to be coupled to the air flow generator. The flow of fresh air generated by the air flow generator is supplied to the air supply duct. The air supply duct extends a substantial portion of the length of the loading space 102. The air supply duct 108 comprises a plurality of openings for distributing the fresh air over the full length of the loading space. The term "substantial" in the context of the present invention means of considerable size, importance. The distribution and size of the openings across the surface and length of the air supply duct 108 is such that flow of fresh air is evenly distributed from the front to the rear of the loading space 102.

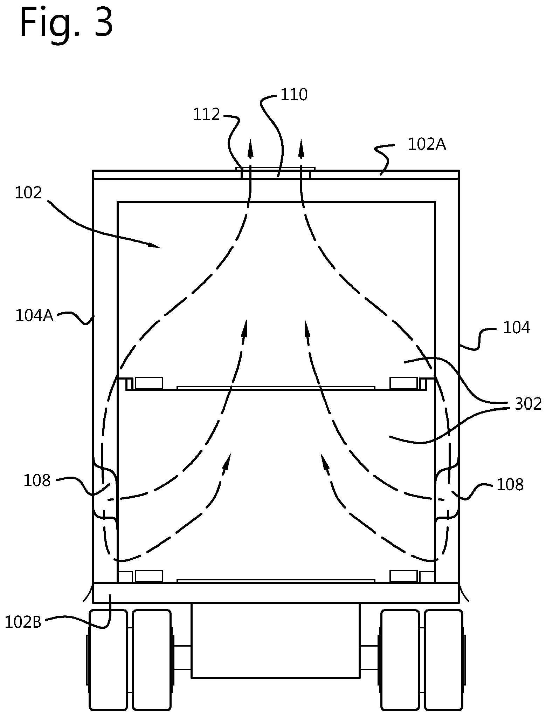

Fig. 3 shows schematically a sectional view of the semi-trailer shown in Figs. 1 and 2. Two modules 302 are placed on top of each other in the loading space 102. A module 32 can be a stack of a number of cages with living animals, e.g. four or five cages. In the present embodiment, when air flows through the air flow duct 108, the duct is inflated. A part of the surface of the air flow ducts 108 is pressed against the module 302. As a result, depending on the position of the outflow openings of the air flow duct, a part of the fresh air flows directly into the module with cages, a part of the fresh air flows downwards through the gap between the sidewall 104, 104A and a module 302 and subsequently through modules 302, and a part of the fresh air flows upwards through the gap between the sidewall 104, 104A and a module and subsequently through modules 302 to one of the ventilation openings 110 in the ceiling of the loading space. In the embodiment shown, the air supply duct is arranged along the lower half of the sidewall 104. The fresh air flows along a side of a module sideways into the cages and through the cages upwards to the top of the module with cages.

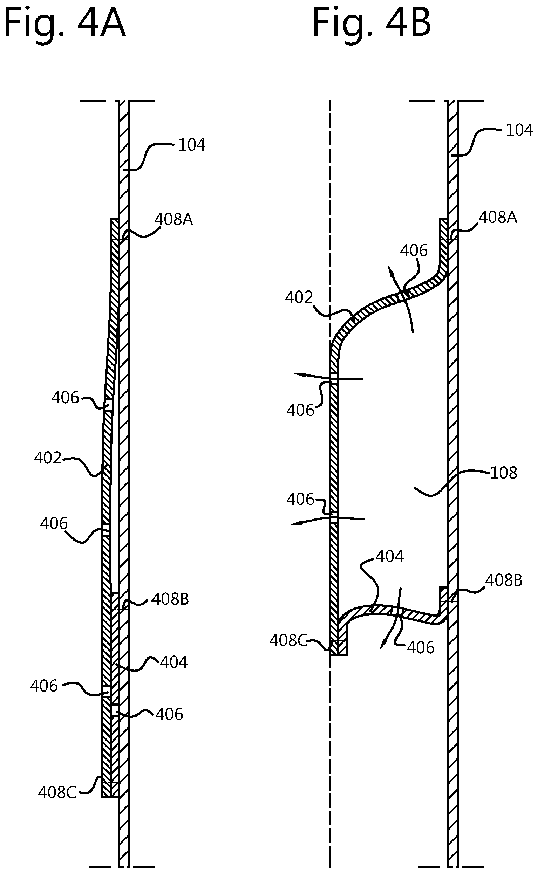

Fig. 4A shows schematically a sectional view of a first embodiment of an air supply duct in idle conditions and Fig. 4B shows schematically a sectional view of the first embodiment of an air supply duct in air supply conditions. In air supply condition the air supply duct 108 is inflated. The vertical dashed line indicates the outer surface of a module with cages. The wall of the air supply duct is composed of three pieces of material. The first piece is a part of the side wall 104 of the loading space. The second piece 402 is a strip of fabric. At 408A a long side of the second piece 402 is connected to the side wall 104. The third piece 404 is a strip of fabric smaller than the second piece 402. One long side of the third piece 404 is joined at 408C to another long side of the second piece 402 and the other long side of the third piece 404 is joined to the side wall 404 below the joint between the second piece 402 and the side wall 104. The connection can be made permanently by means of vulcanisation, welding, sewing, gluing, for example. The detachable connection can be made with fastening means for example but not limited to a zipper, a hook and loop fastener or Velcro. Which method for joining is used depends on the materials used and product requirements. Both the second piece 402 and third piece 404 comprises a plurality of openings 406 for distributing fresh air over the length of the air supply duct into the loading space. The openings of the second piece 402 supply a fresh air flow to the loading space horizontally next to and upwards above the air supply duct 108. The openings of the third piece 404 supply fresh air to the loading space downwards below the air supply duct 108.

The embodiment shown in Figs 4A and 4B has the advantage that when the air supply duct 108 is deflated, the material of the side wall 104, the second piece 402 en third piece 404 form a layer like structure that can easily bend in any direction. This makes this embodiment suitable for use in both sliding and rollable curtains.

The width of the third piece 404 has a width which relates to the width of air gap between the material of the side wall 104 and the modules with cages that are positioned in the loading space. The width of the third piece is preferably minimal the sum of the width of the gap and the width of the border of material necessary to connect the piece to the second piece 402 at 408C and material of the side wall 104 at 408B. This minimal width limits the forces acting on the coupling structures at 408B and 408C.

In an embodiment, the coupling between the second and third piece at 408C comprises fastening means configured for longitudinal opening and closing the air supply duct such that the inner surface of the air supply duct 108 can be cleaned. The fastening means can be at least one of: a zipper, and a hook and loop fastener also known as Velcro. In an alternative embodiment, the third piece is of elastic material.

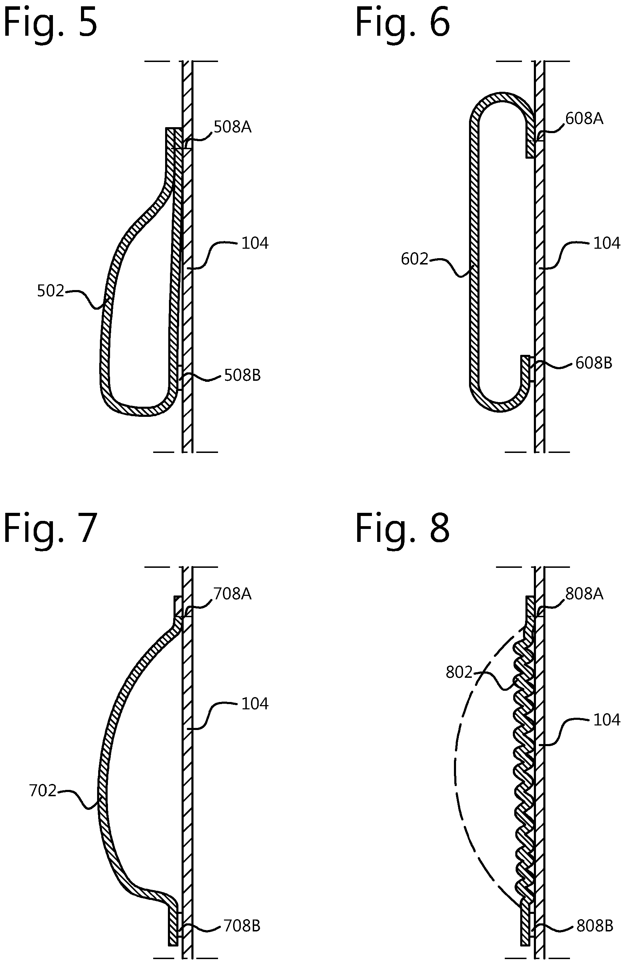

Fig. 5 shows schematically a sectional view of a second embodiment of an air supply duct. The air supply duct 108 is formed by one piece of material 502 that a folded to form a channel. The two overlapping long sides of the piece 502 are coupled together to the material of the sidewall 104 at 508A. Optionally, at 508B, a hook and loop fastener can be used to couple the strip forming the air supply duct at an additional area to the material of the sidewall 104 below the other coupling location 508A.

Fig. 6 shows schematically a sectional view of a third embodiment of an air supply duct. The air supply duct 108 is formed by a strip of material 602 wherein the long sides of the strip are coupled to the material of the sidewall 104. For example, the upper long side of the strip can be coupled to the material of the side wall at position 608A by vulcanisation and the lower long side of the strip 602 can be coupled to the material of the sidewall by vulcanisation or a hook and loop fastener at position 608B. In this embodiment the opposite long sides faces each other.

Fig. 7 shows schematically a sectional view of a fourth embodiment of an air supply duct. The air supply duct 108 is formed by a strip of material 702 wherein the long sides of the strip are coupled to the material of the sidewall 104. For example, the upper long side of the strip can be coupled to the material of the side wall at position 708A by vulcanisation and the lower long side of the strip 702 can be coupled to the material of the sidewall by vulcanisation or a hook and loop fastener at position 708B. In this embodiment the opposite long sides are directed away from each other.

The material and thickness of the strips of material forming together with the sidewall the air supply duct, does not necessarily be the same as the material of the sidewall.

Fig. 8 shows schematically a sectional view of a fifth embodiment of an air supply duct. The air supply duct 108 is formed by a strip of elastic material 802 wherein the long sides of the strip are coupled to the material of the sidewall 104 at position 808A and 808B by a suitable bonding method. In this embodiment the opposite long sides are directed away from each other. The curved dashed line represents the shape of the strip of elastic material when fresh air is supplied to the loading space through the air supply duct. It should be noted that in the Figs. 5 - 8 the openings in the material of the air supply duct are not shown.

In an alternative embodiment, the movable sidewall is a folding wall comprising a number of panels. Each panel is a section of the sidewall. Each panel comprises a part of the air supply duct. When the folding wall is closed, the parts of the air supply duct on all panels are coupled together to form the air supply duct.

In the description above, only one air supply duct is horizontally integrated in the lower half of the movable sidewall. It will be clear to the person skilled in the art that the way in which and the place where the air supply duct extends along a considerable portion of the length of the movable sidewall depends on the application of the vehicle. The present disclosure is thus not limited to said embodiment. Therefore, in another embodiment, two or more air supply ducts are integrated in the movable sidewall. The size of a cross-section of an air supply duct can decrease with the distance to the fan. Furthermore, size and/or the number of openings can vary over the length of the air supply duct to obtain a desired (fresh) air distribution over the loading space.

In Figs. 1 and 2. the air flow generator 106, comprising the fan 202 and controller unit 204, is located at the front of the semi-trailer. The air flow generator can be located at other places, for example below the loading space or at the rear of the semi-trailer. In an alternative embodiment, the vehicle comprises two loading spaces which are separated by a partition wall.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the scope of the appended claims.

## Claims

1. A vehicle (100) for transporting living animals comprising:
at least a first loading space (102); the first loading space is defined by a ceiling, a floor, a front wall, a rear wall, a first sidewall and a second sidewall;
at least the first sidewall (104) being movable such that the living animals may be loaded and unloaded along a substantial portion of the length of the first loading space; and,
an air flow generator (106) for generating an air flow of fresh air to be supplied to the first loading space;
**characterized in that**,
the first sidewall comprises an air supply duct (108) configured to be coupled to and to receive fresh air from the air flow generator; the air supply duct extending a substantial portion of the length of the first loading space, the air supply duct comprises a plurality of openings for distributing the fresh air over the length of the first loading space and at least a part of the air supply duct is part of a movable section of the first sidewall.

2. The vehicle for transporting living animals according to claim 1, wherein the plurality of openings are arranged along the lower half of the first sidewall.

3. The vehicle for transporting living animals according to any of the claims 1 - 2, wherein the ceiling of the first loading space is a lifting roof.

4. The vehicle for transporting living animals according to any of the claims 1 - 3, wherein the first sidewall is a movable tarpaulin.

5. The vehicle for transporting living animals according to claim 3, wherein the first sidewall is a sliding tarpaulin.

6. The vehicle for transporting living animals according to claim 3, wherein the first sidewall is a rollable tarpaulin.

7. The vehicle for transporting living animals according to any of the claims 1 - 6, wherein the first sidewall is a fabric.

8. The vehicle for transporting living animals according to any of the claims 1 - 7, wherein the air supply duct comprises fastening means configured for longitudinal opening and closing the air supply duct.

9. The vehicle for transporting living animals according to claim 8, wherein the fastening means are at least one of: a zipper, a hook and loop fastener.

10. The vehicle for transporting living animals according to claim 1, wherein the first sidewall is a folding wall, wherein a section of the folding wall comprises a part of the air supply duct.

11. The vehicle for transporting living animals according to any of the claims 1 - 10, wherein the loading space further comprises air outlets (110) provided with controllable closing members (112) and wherein a controller unit (204) controls the position of the closing members in dependence of at least one of the following parameters: temperature, humidity and carbon dioxide concentration in the loading space.

12. The vehicle for transporting living animals according to any of the claims 1 - 11, wherein the living animals are living fowl, and more particular poultry or broilers.

13. The vehicle for transporting living animals according to any of the claims 1 - 12, wherein the vehicle is a truck, a trailer or a semi trailer.

## Patentansprüche

1. Fahrzeug (100) zum Transport lebender Tiere, Folgendes umfassend:
mindestens einen ersten Laderaum (102); wobei der erste Laderaum durch eine Decke, einen Boden, eine Vorderwand, eine Rückwand, eine erste Seitenwand und eine zweite Seitenwand definiert ist;
wobei mindestens die erste Seitenwand (104) derart beweglich ist, dass die lebenden Tiere entlang eines erheblichen Teils der Länge des ersten Laderaums beladen und entladen werden können; und
einen Luftstromgenerator (106) zum Erzeugen eines Luftstroms aus Frischluft, der dem ersten Laderaum zugeführt wird;
**dadurch gekennzeichnet, dass**
die erste Seitenwand einen Luftversorgungskanal (108) umfasst, der dazu ausgelegt ist, mit dem Luftstromgenerator gekoppelt zu werden und Frischluft davon zu erhalten; wobei sich der Luftversorgungskanal einen erheblichen Teil der Länge des ersten Laderaums erstreckt, wobei der Luftversorgungskanal mehrere Öffnungen zur Verteilung der Frischluft über die Länge des ersten Laderaums umfasst und mindestens ein Teil des Luftversorgungskanals Teil eines beweglichen Abschnitts der ersten Seitenwand ist.

2. Fahrzeug zum Transport lebender Tiere nach Anspruch 1, wobei die mehreren Öffnungen entlang der unteren Hälfte der ersten Seitenwand angeordnet sind.

3. Fahrzeug zum Transport lebender Tiere nach einem der Ansprüche 1 - 2, wobei die Decke des ersten Laderaums ein Hubdach ist.

4. Fahrzeug zum Transport lebender Tiere nach einem der Ansprüche 1 - 3, wobei die erste Seitenwand eine bewegliche Plane ist.

5. Fahrzeug zum Transport lebender Tiere nach Anspruch 3, wobei die erste Seitenwand eine verschiebbare Plane ist.

6. Fahrzeug zum Transport lebender Tiere nach Anspruch 3, wobei die erste Seitenwand eine rollbare Plane ist.

7. Fahrzeug zum Transport lebender Tiere nach einem der Ansprüche 1 - 6, wobei die erste Seitenwand aus Stoff besteht.

8. Fahrzeug zum Transport lebender Tiere nach einem der Ansprüche 1 - 7, wobei der Luftversorgungskanal eine Befestigungseinrichtung umfasst, die dazu ausgelegt ist, den Luftversorgungskanal in Längsrichtung zu öffnen und zu schließen.

9. Fahrzeug zum Transport lebender Tiere nach Anspruch 8, wobei die Befestigungseinrichtung mindestens eines der folgenden ist: ein Reißverschluss, ein Klettverschluss.

10. Fahrzeug zum Transport lebender Tiere nach Anspruch 1, wobei die erste Seitenwand eine Faltwand ist, wobei ein Abschnitt der Faltwand einen Teil des Luftversorgungskanals umfasst.

11. Fahrzeug zum Transport lebender Tiere nach einem der Ansprüche 1 - 10, wobei der Laderaum ferner Luftauslässe (110) umfasst, die mit steuerbaren Verschlusselementen (112) versehen sind, und wobei eine Steuereinheit (204) die Position der Verschlusselemente in Abhängigkeit von mindestens einem der folgenden Parameter steuert: Temperatur, Luftfeuchtigkeit und Kohlenstoffdioxidkonzentration im Laderaum.

12. Fahrzeug zum Transport lebender Tiere nach einem der Ansprüche 1 - 11, wobei die lebenden Tiere Geflügel und insbesondere Hühner oder Hähnchen sind.

13. Fahrzeug zum Transport lebender Tiere nach einem der Ansprüche 1 - 12, wobei das Fahrzeug ein Lastkraftwagen, ein Anhänger oder ein Sattelauflieger ist.

## Revendications

1. Véhicule (100) pour le transport d'animaux vivants comprenant :
au moins un premier espace de chargement (102) ; le premier espace de chargement étant défini par un plafond, un plancher, une paroi avant, une paroi arrière, une première paroi latérale et une seconde paroi latérale ;
au moins la première paroi latérale (104) étant déplaçable de telle sorte que les animaux vivants puissent être chargés et déchargés le long d'une grande partie de la longueur du premier espace de chargement ; et
un générateur d'écoulement d'air (106) servant à générer un écoulement d'air frais destiné à être acheminé au premier espace de chargement ;
**caractérisé en ce que**
la première paroi latérale comprend un conduit d'alimentation en air (108) conçu pour être accouplé au générateur d'écoulement d'air et recevoir de l'air frais de celui-ci ; le conduit d'alimentation en air s'étendant sur une grande partie de la longueur du premier espace de chargement, le conduit d'alimentation en air comprenant une pluralité d'ouvertures servant à distribuer l'air frais le long de la longueur du premier espace de chargement et au moins une partie du conduit d'alimentation en air faisant partie d'une section déplaçable de la première paroi latérale.

2. Véhicule pour le transport d'animaux vivants selon la revendication 1, dans lequel la pluralité d'ouvertures sont placées le long de la moitié inférieure de la première paroi latérale.

3. Véhicule pour le transport d'animaux vivants selon l'une quelconque des revendications 1 - 2, dans lequel le plafond du premier espace de chargement est un toit relevable.

4. Véhicule pour le transport d'animaux vivants selon l'une quelconque des revendications 1 - 3, dans lequel la première paroi latérale est une bâche déplaçable.

5. Véhicule pour le transport d'animaux vivants selon la revendication 3, dans lequel la première paroi latérale est une bâche coulissante.

6. Véhicule pour le transport d'animaux vivants selon la revendication 3, dans lequel la première paroi latérale est une bâche enroulable.

7. Véhicule pour le transport d'animaux vivants selon l'une quelconque des revendications 1 - 6, dans lequel la première paroi latérale est une étoffe.

8. Véhicule pour le transport d'animaux vivants selon l'une quelconque des revendications 1 - 7, dans lequel le conduit d'alimentation en air comprend des moyens d'attache conçus pour une ouverture et une fermeture longitudinales du conduit d'alimentation en air.

9. Véhicule pour le transport d'animaux vivants selon la revendication 8, dans lequel les moyens d'attache sont au moins l'un de : une fermeture à glissière, un système d'attache autoagrippant.

10. Véhicule pour le transport d'animaux vivants selon la revendication 1, dans lequel la première paroi latérale est une paroi pliante, une section de la paroi pliante comprenant une partie du conduit d'alimentation en air.

11. Véhicule pour le transport d'animaux vivants selon l'une quelconque des revendications 1 - 10, dans lequel l'espace de chargement comprend en outre des sorties d'air (110) pourvues d'éléments de fermeture réglables (112) et dans lequel une unité de commande (204) règle la position des éléments de fermeture en fonction d'au moins un des paramètres suivants : température, humidité et concentration de dioxyde de carbone dans l'espace de chargement.

12. Véhicule pour le transport d'animaux vivants selon l'une quelconque des revendications 1 - 11, dans lequel les animaux vivants sont des volatiles vivants, et plus particulièrement des volailles ou des poulets à griller.

13. Véhicule pour le transport d'animaux vivants selon l'une quelconque des revendications 1 - 12, le véhicule étant un camion, une remorque ou une semi-remorque.
